# EUROPEAN PATENT SPECIFICATION

(11) **EP 0 585 456 B1**
(45) Date of publication and mention of the grant of the patent: **07.05.1997**
(21) Application number: 92905006.0
(22) Date of filing: 18.02.1992
(51) Int. Cl.: C08J 3/00, C01B 33/158

(54) **PROCESS FOR PRODUCING HYDROPHOBIC AEROGEL**
VERFAHREN ZUR HERSTELLUNG EINES HYDROPHOBEN AEROGELS
PROCEDE DE PRODUCTION CONCERNANT UN AEROGEL HYDROPHOBE

(43) Date of publication of application: 09.03.1994
(73) Proprietor: MATSUSHITA ELECTRIC WORKS LTD, 571-71 Osaka (JP)
(72) Inventor: YOKOGAWA, Hiroshi, Hirakata-shi, Osaka 573 (JP); YOKOYAMA, Masaru, Yao-shi, Osaka 581 (JP); TAKAHAMA, Koichi, Amagasaki-shi, Hyogo 661 (JP); UEGAKI, Yuriko, Osaka-shi, Osaka 536 (JP)
(74) Representative: Goddar, Heinz J., Dr.
(86) International application number: JP9200156
(87) International publication number: WO9316125

(56) References cited:
- EP-A- 0 382 310
- JP-A-57 209 817
- JP-A-63 040 716
- US-A- 4 954 327
- DATABASE WPI Derwent Publications Ltd., London, GB; AN 92-288975[35] & JP-A-4 198 238 (MATSUSHITA ELECTRIC WORKS LTD.) 17 July 1992
- DATABASE WPI Derwent Publications Ltd., London, GB; AN 94-051133[07] & JP-A-5 279 011 (MATSUSHITA ELECTRIC WORKS LTD.) 26 October 1993
- DATABASE WPI Derwent Publications Ltd., London, GB; AN 92-288975[35] & JP-A-4 198 238
- DATABASE WPI Derwent Publications Ltd., London, GB; AN 94-051133[07] & JP-A-5 279 011

## Description

### TECHNICAL FIELD

The present invention relates to a process of forming a hydrophobic aerogel with excellent transparency and high thermal resistance.

### BACKGROUND ART

Silica aerogel is already known as a material having excellent transparency and low thermal conductivity. As described in U.S. Pat. No. 4,402,927, No.4,432,956 and No. 4,610,863, the aerogel is obtained by the step comprising, hydrolyzing and condensing an alkoxysilane in order to form a polymer having a skeleton structure of (SiO₂)ₙ and silanol groups, supercritically drying the polymer in the presence of a dispersing medium such as carbon dioxide at temperature and pressure above a critical point of the dispersing medium. The patents also describe that thus obtained aerogel is useful as a material having excellent transparency and high thermal resistance. By the way, the skeleton structure of the aerogel includes the silanol groups by a certain rate. The silanol groups having high hydrophilicity which is formed by contact with moisture in the atmosphere increase at the surface of the aerogel. Therefore, the moisture adsorbing in the surface of the aerogel increases as the hours passed, so that optical and thermal properties of the aerogel such as transparency and thermal resistance will deteriorate, and also, a dimensional variation and cracks of the aerogel will result from shrinkage which is induced by the adsorption of the moisture. That is to say, there are problems to be improved about a quality and performance of the aerogel.

### DISCLOSURE OF INVENTION

It is a primary object of the present invention to provide an improved process for forming a hydrophobic aerogel of silica which has stable transparency and thermal resistance even if the hours passed. It is a further object of the present invention to provide a preferred process for forming the hydrophobic aerogel which may be particularly useful to attain the primary object in industrial field. The primary object is attained by utilizing a gel including a dispersing medium and a polymer [silicate compound] having a skeleton structure of (SiO₂)ₙ and silanol groups, and supercritically drying thereof. Concretely, it is attained by utilizing a denatured polymer which is obtained by reacting the polymer having a skeleton structure (SiO₂)ₙ and silanol groups with a hydrophobic agent having a hydrophobic groups as well as a functional groups reactive to the silanol groups. That is to say, the improved process of the present invention comprises the steps of reacting the polymer having a skeleton structure (SiO₂)ₙ and silanol groups with a hydrophobic agent having a hydrophobic groups as well as a functional groups reactive to the silanol groups to obtain a denatured polymer, dispersing the denatured polymer in the dispersing medium to form a resulting gel, and supercritically drying the resulting gel at temperature and pressure above a critical point of the dispersing medium. A detailed explanation of the present invention is described below. The polymer comprises the skeleton structure having at least (SiO₂)ₙ and the silanol groups, and also may partially include a silicate compound having a chemical bond expressed by the following formula; Si-R¹ wherein n is a positive number, and R¹ is a C₁ - C₅ alkyl group or a phenyl group. Silicon of the polymer adsorbs moisture in the atmosphere, so that it has tendency to stabilize as the silanol group. The polymer having the skeleton structure of (SiO₂)ₙ as described above is obtained by hydrolyzing and condensing an alkoxysilane which is expressed by the following formula;

SiR¹ ₙ(OR²)₄₋ₙ (1)

wherein each of R¹ and R² stands for a C₁ - C₅ alkyl group or phenyl group, n is 0-2, R¹ may be the same or different groups of the groups when n=2, R² may be the same or different ones of the groups when n ≤ 2. When concretely illustrating the alkoxysilane, the followings are acceptable. That is, an alkoxysilane having two functional groups is expressed by the following formula; 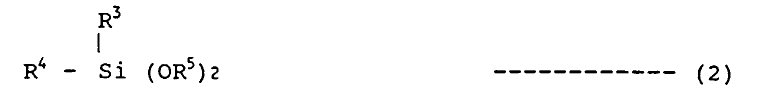 wherein each of R³, R⁴ and R⁵ stands for the C₁ - C₅ alkyl group or the phenyl group, two R⁵ are selected as the same or different groups of the groups. And also, an alkoxysilane having three functional groups is expressed by the following formula;

R⁶ - Si(OR⁷)₃ (3)

wherein each of R⁶ and R⁷ stands for the C₁ - C₅ alkyl group or the phenyl group, three R⁷ are selected from any combination of the groups. And further, an alkoxysilane having four functional groups is expressed by the following formula;

Si(OR⁸)₄ (4)

wherein R⁸ stands for the C₁ - C₅ alkyl group or the phenyl group, four R⁸ are selected from any combination of the groups. At least one selected from the group of the alkoxysilane expressed by the formula (3) or (4), or a mixture of the alkoxysilane expressed by the formula (2) and at least one selected form the group of the alkoxysilane expressed by the formula (3) or (4) are also acceptable for the present invention. That is to say, the alkoxysilane having two functional groups such as dimethyldimethoxysilane, dimethyldiethoxysilane, diphenyldiethoxysilane, diphenyldimethoxysilane, methylphenyldiethoxysilane, methylphenyldimethoxysilane, diethyldiethoxysilane, and diethyldimethoxysilane, etc., is acceptable for the present invention. The alkoxysilane having three functional groups such as methyltrimethoxysilane, methyltriethoxysilane, ethyltrimethoxysilane, ethyltriethoxysilane, phenyltrimethoxysilane, and phenyltriethoxysilane, etc., is acceptable for the present invention. The alkoxysilane having four functional groups such as tetramethoxysilane, and tetraethoxysilane, etc., is also acceptable for the present invention. An addition of a catalyst to a reaction system including the alkoxysilane described above is effective to hydrolyze the alkoxysilane in order to generate a silicon hydroxide, and then to condense the silicon hydroxide. The catalyst is selected from the group consisting of an acid catalyst such as hydrochloric acid, citric acid, nitric acid sulfuric acid, and ammonium fluoride, etc., and a base catalyst such as ammonia and pyrazine, etc.. When the reaction system includes a mixed solution of water and a first solvent which is capable of dissolving the alkoxysilane and forming aqueous solution, the condensation of the silicon hydroxide can be performed continuously after the hydrolysis of the alkoxysilane has been completed. The first solvent is selected from the group consisting of methyl alcohol, ethyl alcohol, isopropyl alcohol, acetone and N, N-dimethylformamide, etc.. Thus obtained polymer is a gel including the first solvent as the dispersing medium. In alternative the dispersing medium is selected to be a compound having a critical point less than that of said first solvent for preparation of said denatured polymer and to replace said solvent, wherein said compound solvent with a low critical point is preferably liquified carbon dioxide. Furthermore, said first solvent preferably has a higher boiling point than an alcohol. When a starting material is the polymer [gel] by hydrolyzing and condensing the alkoxysilane as described above, a reaction for generating a denatured polymer is efficiently performed by washing the obtained polymer with the first solvent to remove the water in the obtained polymer. The reaction for generating the denatured polymer is explained below. That is, the denatured polymer which was replaced hydroxyl groups in the silanol groups with the hydrophobic groups is obtained by reacting the polymer having a skeleton structure of (SiO₂)ₙ with the hydrophobic agent having the hydrophobic groups as well as the functional groups reactive to the silanol groups. Therefore, to replace the hydroxyl groups in the silanol groups with the hydrophobic groups, it prefers that the hydrophobic agent is added to the polymer by a sufficient rate relative to the silanol groups existing in the surface of the polymer, i.e., it prefers that a weight ratio of the polymer to the hydrophobic agent is 0.5 to 10. The functional group of the hydrophobic agent is selected from the group consisting of halogen, amino group, imino group, carboxyl group, and alkoxyl group. On the other hand, the hydrophobic group of the hydrophobic agent is selected from the group consisting of alkyl group, phenyl group and fluoride thereof. Therefore, the hydrophobic agent is at least one selected from the group consisting of an organic silane compound such as hexamethyldisilazane, hexamethyldisiloxane, trimethylchlorosilane, trimethylmethoxysilane, trimethylethoxysilane, triethylethoxysilane, triethylmethoxysilane, dimethyldichlorosilane, dimethyldiethoxysilane, methyltrichlorosilane, and ethyltrichlorosilane, etc.. The hydrophobic agent is also selected from the group consisting of a carboxylic acid such as acetic acid, formic acid and succinic acid, etc., and a halogenated alkyl such as methylchloride, etc.. A hydrophobic treatment, which is a reaction of the polymer [gel] and the hydrophobic agent described above, is performed by soaking the obtained polymer in a solution of a hydrophobic agent in a second solvent, and mixing the obtained polymer with the solution so as to diffuse each other, and then heating thereof. The second solvent such as ethyl alcohol, methyl alcohol, toluene, benzene, and N, N-dimethylformamide, etc., is utilized in the hydrophobic treatment. It prefers that the second solvent has capable of easily dissolving the hydrophobic agent therein, and replacing with the first solvent in the obtained polymer. It also prefers that the second solvent is a third solvent which is utilized in the step of supercritical drying, or the second solvent is easily replaced with the third solvent. Thus obtained gel by the above described steps essentially consists of the denatured polymer and the dispersing medium. The dispersing medium is defined by the first solvent used for generating the polymer, or the second solvent used in the hydrophobic treatment, or the third solvent utilized in the step of supercritical drying. In the specification of the present invention, "the dispersing medium " as used herein is meant to be a liquid component included in the gel, and "solvent" is used as an equally generic synonym. After the hydrophobic treatment, the gel is supercritically dried at temperature and pressure above a critical point of the third solvent in order to form the hydrophobic aerogel. The third solvent is at least one selected from the group consisting of methyl alcohol, ethyl alcohol, isopropyl alcohol, dichlorofluoromethane, liquefied carbon dioxide and water, etc.. The supercritical drying is performed in, for example, an autoclave by increasing temperature and pressure above the critical point of the third solvent, and then, slowly removing the third solvent from the gel, so as to give the hydrophobic aerogel. The hydrophobic aerogel of the present invention has a porous structure consisting of exceedingly fine particles of silica. As a particle size of the silica and a distance between the adjacent particles are much shorter than a wave length of light, the hydrophobic aerogel has excellent transparency of light irrespective of the porous structure with low thermal conductivity. And besides, as the hydroxyl groups in the silanol groups, which exists in the surface of the polymer having the skeleton structure of (SiO₂)ₙ before supercritically drying, is replaced with the hydrophobic groups of the hydrophobic agent, the hydrophobic aerogel of the present invention will not adsorb moisture in the atmosphere, so that it provides excellent transparency and thermal resistance even after using it for long time periods. The supercritical drying of the present invention is very useful to remove the dispersing medium from the gel so as to form the hydrophobic aerogel while maintaining the porous structure without occurring only a small structure change which is induced by hydrogen bond between the silanol groups. Particularly, as the dispersing medium is removed from the gel so as to maintain the porous structure, the hydrophobic aerogel having a desired bulk density or pore size is readily fabricated by the improved process of the present invention, so that it enhances an industrial value of the aerogel.

### BRIEF DESCRIPTION OF DRAWINGS

FIG. 1 is a diagram showing bulk densities of aerogel measured before and after supercritically drying and those of the aerogel after being subjected to a humidity test with respect to example 1 of the present invention in comparison with comparative example 1;
FIG. 2 is a diagram showing light transmissivities of the aerogel measured before and after supercritically drying and those of the aerogel after being subjected to the humidity test with respect to example 1 of the present invention in comparison with comparative example 1.

### BEST MODE FOR CARRYING OUT THE INVENTION

Examples 1-10 of the present invention and comparative examples 1-5 are described below. However, the present invention is not limited by the examples.

### EXAMPLE 1

A mixed solution of aqueous ammonia of 0.01 mol/l and ethyl alcohol was slowly added in tetramethoxysilane which is an alkoxysilane having four functional groups. A mixture ratio of tetramethoxysilane : ethyl alcohol : ammonia was 1 : 5 : 4 by the molar ratio. Thus obtained mixture was hydrolyzed at 20°C while agitating it for 1 hour, and subsequently, gelled in a vessel having a diameter of 51mm. Condensation of thus obtained gel was expedited by heating to a temperature of 50°C while adding ethyl alcohol repeatedly so as not to dry the gel, thereby forming a gelled polymer [alcogel] having a skeleton structure of (SiO₂)ₙ. The gelled polymer had a thickness of 5mm, a diameter of 51mm. For performing a hydrophobic treatment of the gelled polymer [alcogel], toluene solution was prepared by dissolving hexamethyldisilazane in toluene by a ratio of 0.2 mol/l, and the gelled polymer was put in the toluene solution which has five times volume compared with the polymer, and then, the hexamethyldisilazane was infiltrated into the polymer by spending 24 hours. Subsequently, thus obtained polymer was refluxed with stirring while being heated to a temperature of 110°C for about 2 hours, so that a denatured polymer which is also a hydrophobic polymer was obtained. And then, the denatured polymer [gel] was put in ethyl alcohol. A solvent included in the denatured polymer was replaced with the ethyl alcohol repeatedly by spending 24 hours, that is, non-reacted hexamethyldisilazane and toluene in the denatured polymer were replaced with the ethyl alcohol. And besides, the alcogel was put in liquefied carbon dioxide at a temperature of 18°C under a pressure of 55 atm for 3 hours in order to replace the ethyl alcohol included in the alcogel with the carbon dioxide, and subsequently was placed in an autoclave. The autoclave was filled with a dispersing medium consisting of a mixture of ethyl alcohol and carbon dioxide. A supercritical drying was performed in the autoclave for about 48 hours under a supercritical condition such as a temperature of 80°C and a pressure of 160 atm., so that an aerogel which has an extremely fine porous structure and excellent transparency and low bulk density was formed.

### EXAMPLE 2

Example 2 was identical in process for forming the aerogel to the example 1 except that trimethylchlorosilane as a hydrophobic agent was utilized in stead of hexamethyldisilazane.

### EXAMPLE 3

The denatured polymer [gel] obtained by the same process of the example 1 was put in ethyl alcohol. And then, the solvent included in the denatured polymer was replaced with the ethyl alcohol repeatedly by spending 24 hours, that is, the non-reacted hexamethyldisilazane and toluene in the denatured polymer were replaced with the ethyl alcohol. Thus obtained gel [alcogel] was placed in the autoclave. And then, the autoclave was filled with ethyl alcohol as the dispersing medium. Subsequently, the supercritical drying was performed in the autoclave for about 6 hours under a supercritical condition such as a temperature of 250°C and a pressure of 80 atm., so that an aerogel was formed.

### EXAMPLE 4

The mixed solution of aqueous ammonia of 0.01 mol/l and ethyl alcohol was slowly added in tetraethoxysilane. A mixture ratio of tetraethoxysilane : ethyl alcohol : water was 1 : 5.5 : 5 by the molar ratio. Thus obtained mixture was hydrolyzed at 20°C while agitating for 1 hour, and subsequently, gelled in the same vessel of the example 1. The condensation of thus obtained gel was expedited by heating to a temperature of 50°C while adding ethyl alcohol repeatedly so as not to dry the gel, thereby forming a gelled polymer [alcogel] having a skeleton structure of (SiO₂)ₙ. Subsequently, the same process of the example 1 was given to thus obtained polymer [alcogel] in order to form an aerogel.

### EXAMPLE 5

A mixed solution of aqueous solution of ammonium fluoride of 0.04 mol/l and ethyl alcohol was slowly added in tetraethoxysilane. A mixture ratio of tetraethoxysilane : ethyl alcohol : water was 1 : 5.5 : 5 by the molar ratio. Thus obtained mixture was hydrolyzed at 20°C while agitating for 1 hour, and subsequently, gelled in the same vessel of the example 1. The condensation of thus obtained gel was expedited by heating to a temperature of 50°C while adding ethyl alcohol repeatedly so as not to dry the gel, thereby forming a gelled polymer [alcogel] having a skeleton structure of (SiO₂)ₙ. Subsequently, the same process of the example 1 was given to thus obtained polymer [alcogel] in order to form an aerogel.

### EXAMPLE 6

The denatured polymer [gel] formed by the same process of the example 1 and performed the hydrophobic treatment was put in ethyl alcohol. And then, the solvent included in the denatured polymer was replaced with the ethyl alcohol repeatedly by spending 24 hours, that is, the non-reacted hexamethyldisilazane and toluene in the denatured polymer were replaced with the ethyl alcohol, thereby forming alcogel. And besides, the alcogel was put in carbon dioxide at a temperature of 18°C under a pressure of 55 atm, so that the ethyl alcohol in the alcogel was replaced with the carbon dioxide. Thus obtained alcogel was placed in the autoclave. And then, the autoclave was filled with carbon dioxide. Subsequently, the supercritical drying was performed in the autoclave for about 24 hours under a supercritical condition such as a temperature of 40°C and a pressure of 80 atm., so that an aerogel was formed.

### EXAMPLE 7

The mixed solution of aqueous ammonia of 0.01 mol/l and ethyl alcohol was slowly added in a mixture of dimethyldimethoxysilane, which is an alkoxysilane having two functional group, and tetramethoxysilane having four functional group. A mixture ratio of dimethyldimethoxysilane : tetramethoxysilane was 1 : 9 by the molar ratio. On the other hand, a mixture ratio of tetramethoxysilane : ethyl alcohol : water was 1 : 5 : 4 by the molar ratio. Thus obtained mixture was hydrolyzed at 20°C while agitating for 1 hour, and subsequently, gelled in the same vessel of the example 1. The condensation of thus obtained gel was expedited by heating to a temperature of 50°C while adding ethyl alcohol repeatedly so as not to dry the gel, thereby forming a gelled polymer [alcogel] having a skeleton structure of (SiO₂)ₙ. Subsequently, the same process of the example 1 was given to thus obtained polymer [alcogel] in order to form an aerogel.

### EXAMPLE 8

The mixed solution of aqueous ammonia of 0.01 mol/l and ethyl alcohol was slowly added in a mixture of methyltrimethoxysilane, which is an alkoxysilane having three functional group, and tetramethoxysilane having four functional group. A mixture ratio of methyltrimethoxysilane : tetramethoxysilane is 5 : 5 by the molar ratio. On the other hand, a mixture ratio of tetramethoxysilane : ethyl alcohol : water was 1 : 5 : 4 by the molar ratio. Thus obtained mixture was hydrolyzed at 20°C while agitating for 1 hour, and subsequently, gelled in the same vessel of the example 1. The condensation of thus obtained gel was expedited by heating to a temperature of 50°C while adding ethyl alcohol repeatedly so as not to dry the gel, thereby forming a gelled polymer [alcogel] having a skeleton structure of (SiO₂)ₙ. Subsequently, the same process of the example 1 was given to thus obtained polymer [alcogel] in order to form an aerogel.

### EXAMPLE 9

The gelled polymer having the skeleton structure of (SiO₂)ₙ, which was formed by the same process of the example 1, was put in a toluene solution including acetic anhydride as the hydrophobic agent and pyrazine of 10cc as a catalyst. The acetic anhydride was infiltrated into the polymer by spending 24 hours. Subsequently, thus obtained polymer was refluxed with stirring while being heated to a temperature of 110°C for about 2 hours, so that a denatured polymer [gel] which is also a hydrophobic polymer in a humid state was obtained. Subsequently, the same process of the example 1 was given to the denatured polymer [gel] in order to form an aerogel.

### EXAMPLE 10

The gelled polymer having the skeleton structure of (SiO₂)ₙ was formed by the same process of the example 1. The gelled polymer was put in ethyl alcohol solution of hexamethyldisilazane in ethyl alcohol by a ratio of 0.2 mol/l, which has five times volume compared with the polymer. And then, the hexamethyldisilazane was infiltrated into the polymer by spending 24 hours. Subsequently, thus obtained polymer was refluxed with stirring while being heated to a temperature of 70°C for about 2 hours, so that a denatured polymer [alcogel] which is also a hydrophobic polymer in a humid state was obtained. Subsequently, the same process of the example 1 was given to the denatured polymer [alcogel] in order to form an aerogel.

### COMPARATIVE EXAMPLE 1

The gelled polymer having the skeleton structure of (SiO₂)ₙ, which was formed by the same process of the example 1, was put in ethyl alcohol without reacting with the hydrophobic agent. And then, a solvent included in the gelled polymer was replaced with the ethyl alcohol repeatedly by spending 24 hours. Thus obtained alcogel was put in carbon dioxide at a temperature of 18°C under a pressure of 55 atm for 3 hours so as to replace the ethyl alcohol included in the alcogel with the carbon dioxide. Subsequently, thus obtained polymer was placed in the autoclave. And then, the autoclave was filled with the dispersing medium consisting of the mixture of ethyl alcohol and carbon dioxide. The supercritical drying is performed in the autoclave for about 48 hours under the supercritical condition such as a temperature of 80°C and a pressure of 160 atm, so that thus obtained aerogel has an extremely fine porous structure and excellent transparency and low bulk density but having small size compared with the aerogel of the example 1.

### COMPARATIVE EXAMPLE 2

The gelled polymer having the skeleton structure of (SiO₂)ₙ, which was formed by the same process of the example 3, was put in ethyl alcohol without reacting with the hydrophobic agent. And then, a solvent included in the gelled polymer was replaced with the ethyl alcohol repeatedly by spending 24 hours. Subsequently, thus obtained polymer was placed in the autoclave. The autoclave was filled with ethyl alcohol as the dispersing medium. And then, the supercritical drying is performed in the autoclave for about 6 hours under the supercritical condition such as a temperature of 250°C and a pressure of 80 atm, so that an aerogel was obtained.

### COMPARATIVE EXAMPLE 3

The gelled polymer having the skeleton structure of (SiO₂)ₙ, which was formed by the same process of the example 4, was put in ethyl alcohol without reacting with the hydrophobic agent. And then, a solvent included in the gelled polymer was replaced with the ethyl alcohol repeatedly by spending 24 hours. Subsequently, the same supercritical drying of the example 4 is performed in order to form an aerogel.

### COMPARATIVE EXAMPLE 4

The gelled polymer having the skeleton structure of (SiO₂)ₙ, which was formed by the same process of the example 1, was dried in the atmosphere for one week at a temperature of 20°C under an atmospheric pressure without reacting with the hydrophobic agent, so that a xerogel having coarse porous structure was formed.

### COMPARATIVE EXAMPLE 5

The denatured polymer, which was formed by the same process of the example 1 and performed the hydrophobic treatment, was dried in the atmosphere for one week at a temperature of 20°C under an atmospheric pressure, so that a xerogel having coarse porous structure was formed.

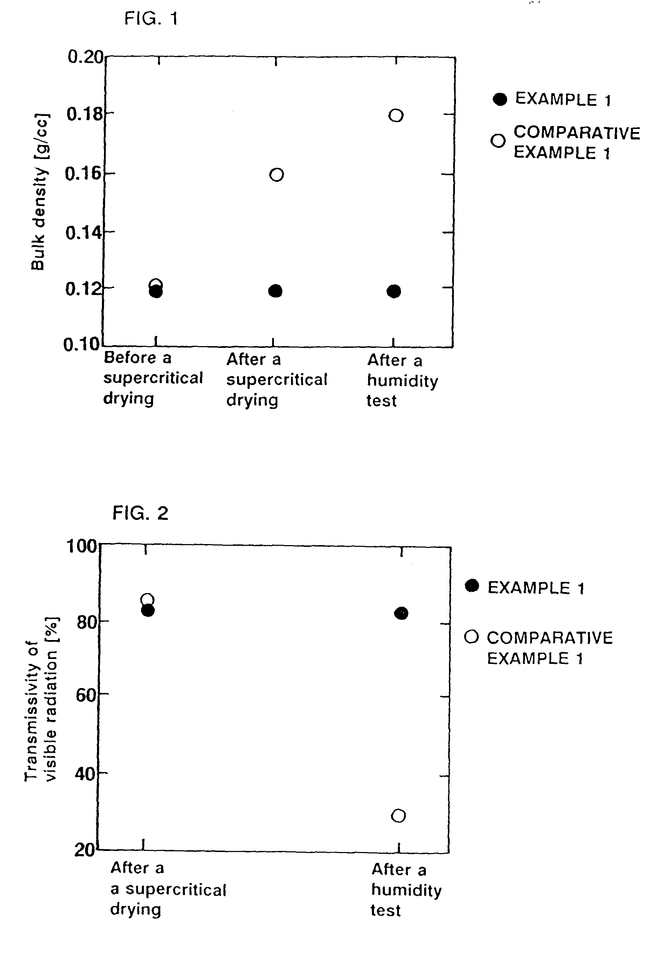

TABLE 2 shows bulk densities, thermal conductivities, light transmissivities and specific surfaces of the aerogel and the xerogel measured immediately after a supercritical drying and after a humidity test with respect to the examples 1-9 and the comparative examples 1-5. TABLE 1 also shows starting materials, catalysts, hydrophobic agents, dispersing mediums and conditions for supercritical drying, respectively, utilized in the examples 1-10 and the comparative examples 1-5. The specific surfaces were measured by the nitrogen-absorption BET method, while thermal conductivities were measured in accordance with ASTM C-518 by the use of a thermal conductivity measuring device in a steady-state process at temperatures of 20°C and 40°C. The light transmissivities were determined by a method based on JIS-R3106 which comprises the step of measuring spectral distribution of visible radiation. The humidity test was performed for 48 hours at a temperature of 60°C in a isothermal humidistat held at a relative humidity of 90%. As shown in TABLE 2, the aerogel of the examples 1-10 have lower bulk densities than the xerogel of the comparative examples 1-5. It is considered that the gel with the hydrophobic treatment did not occurred a shrinkage when supercritically drying the gel, on the other hand, the gel without the hydrophobic treatment [COMPARATIVE EXAMPLE 1-3] occurred a small shrinkage when supercritically drying, and also, a large shrinkage was occurred by usual drying the gel irrespective of the presence of the hydrophobic treatment. FIG.1 and 2 are diagrams showing bulk densities and light transmissivities of the aerogel, respectively, which were measured before and after supercritically drying and also after the humidity test, with respect to the example 1 of the present invention and the comparative example 1. The bulk densities of the gel before supercritically drying was determined by dividing weight of solid phase of the gel by total volume of the gel. As shown in FIG. 1 and 2, the aerogel formed by supercritically drying the gel with the hydrophobic treatment maintains excellent performance for longer time periods compared with the aerogel without the hydrophobic treatment, that is, it is confirmed that the hydrophobic aerogel of the present invention has excellent water proof so as not to deteriorate the performance even if the aerogel contacts to water.

### INDUSTRIAL APPLICABILITY

A hydrophobic aerogel fabricated in accordance with the present invention has improved characteristics free from deterioration in light transmissivity as well as lowered thermal resistance which would otherwise occur by contact with moisture over an extended time periods. The aerogel is particularly useful for a heat insulator and an acoustic material and is provided with a variety of configuration such as plate, powder, etc.. And besides, the aerogel is possible to utilize in Cerenkov counter.

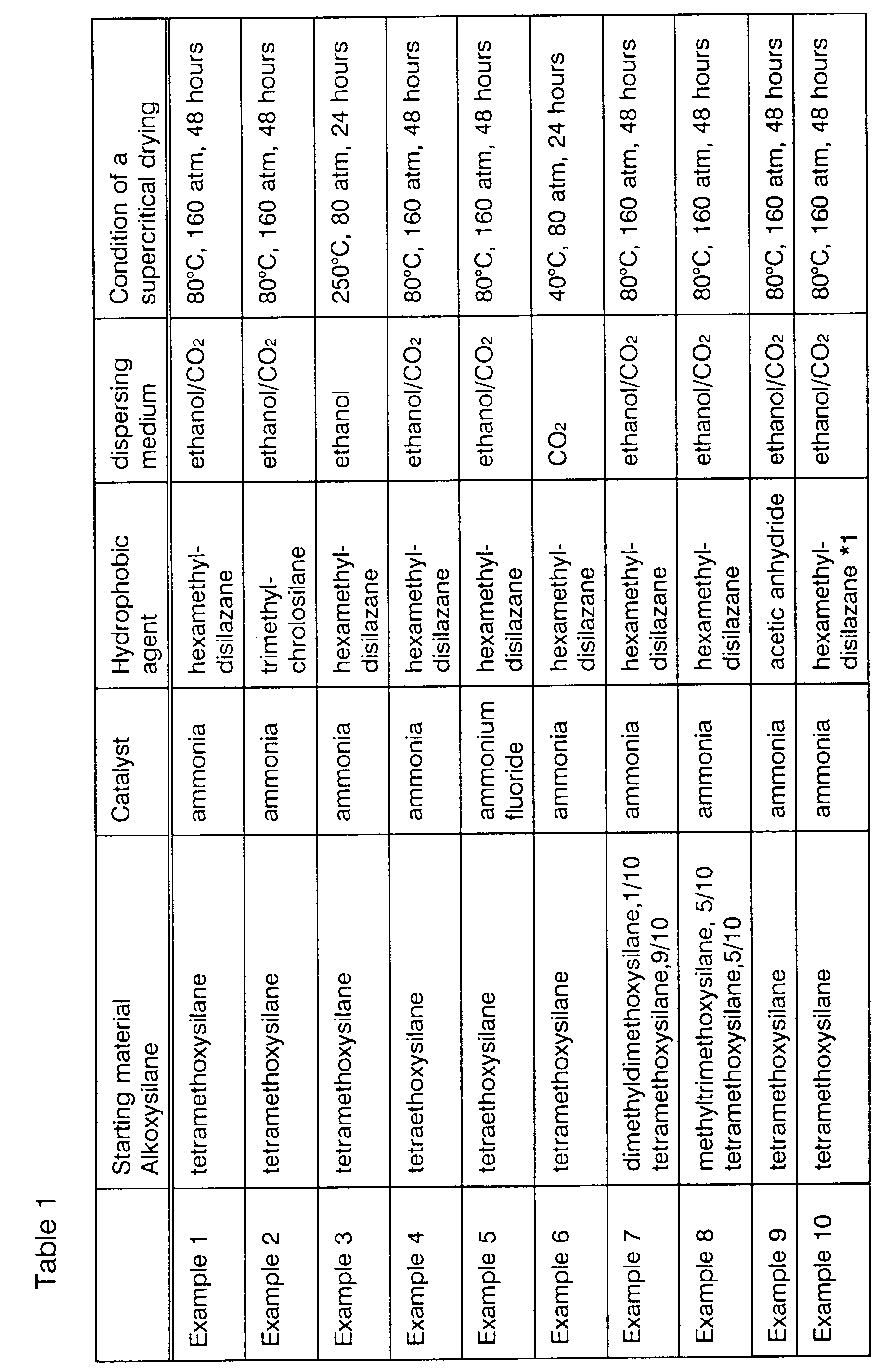

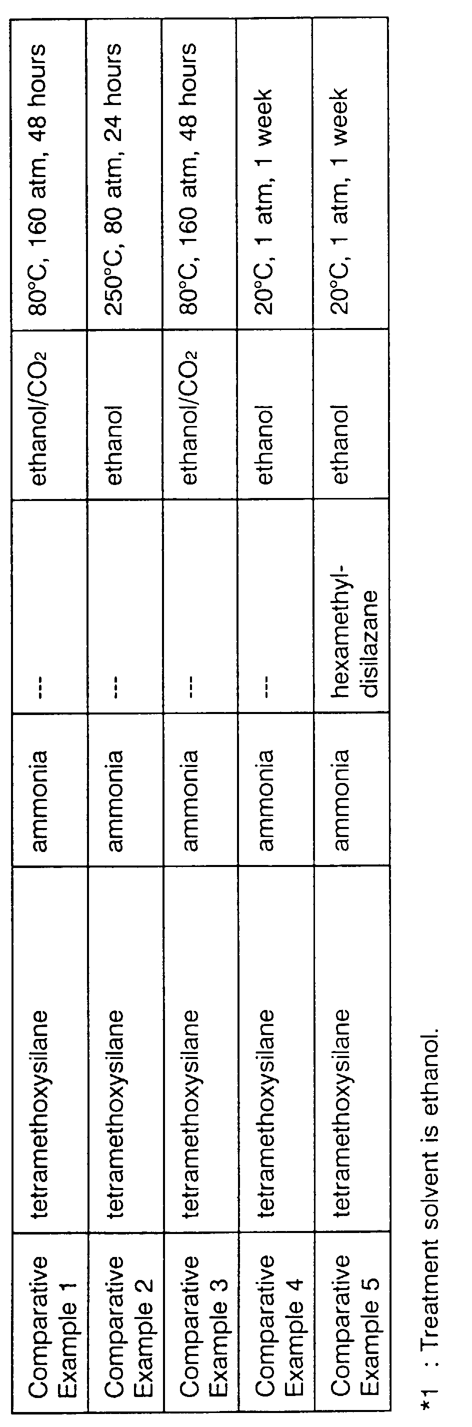

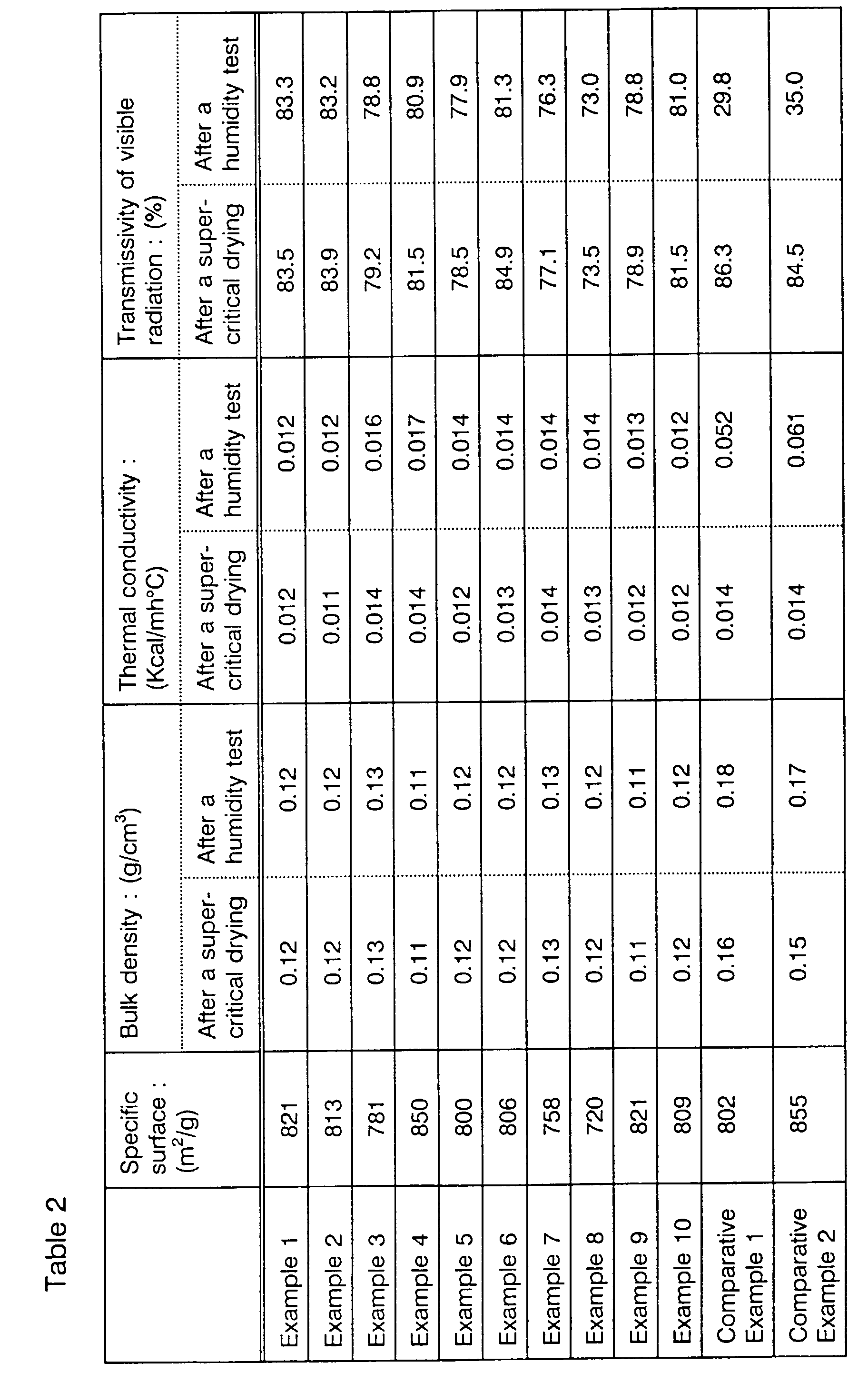

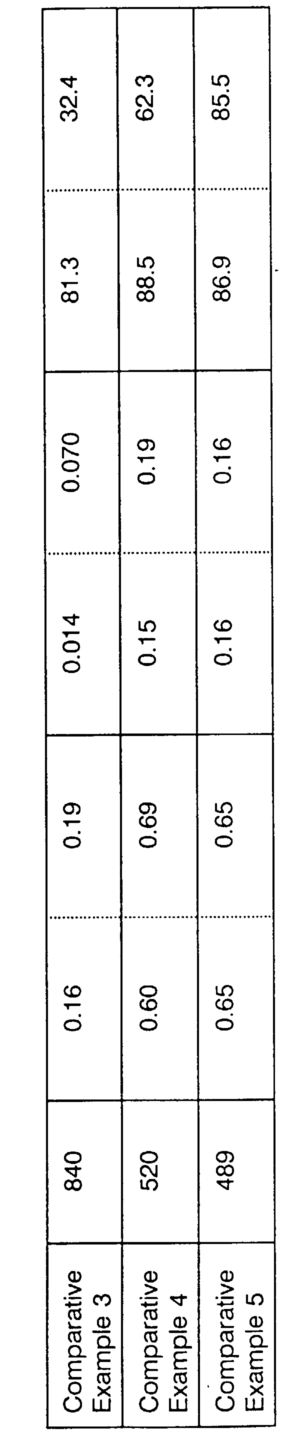

## Claims

1. A process of forming a hydrophobic aerogel comprising the steps of:
reacting a polymer having a skeleton structure of (SiO₂)ₙ with a hydrophobic agent having hydrophobic groups as well as functional groups reactive to silanol groups to obtain a denatured polymer;
dispersing said denatured polymer in a dispersing medium to form a resulting gel; and
supercritically drying said resulting gel at temperature and pressure above a critical point of said dispersing medium.

2. A process as set forth in claim 1, wherein said polymer has said silanol groups reacting with the functional groups of said hydrophobic agent.

3. A process as set forth in claim 1, wherein said functional group is selected from the group consisting of halogen, amino group, imino group, carboxyl group, and alkoxyl group.

4. A process as set forth in claim 3, wherein said hydrophobic group is selected from the group consisting of alkyl group and phenyl group.

5. A process as set forth in claim 1, wherein said hydrophobic agent is a silane compound.

6. A process as set forth in claim 1, said polymer is provided by hydrolyzing and condensing an alkoxysilane which is expressed by the following formula;
SiR¹ ₙ(OR²)₄₋ₙ
wherein each of R¹ and R² stands for a C₁ - C₅ alkyl group or a phenyl group, n is 0-2, R¹ may be the same or different groups of said groups when n=2, R² may be the same or different ones of said groups when n ≤ 2.

7. A process as set forth in claim 6, wherein said hydrolyzing and condensing is effected by the use of an aqueous solution of a solvent capable of being compatible with water and dissolving said alkoxysilane.

8. A process as set forth in claim 7, wherein said solvent is selected from the group consisting of methyl alcohol, ethyl alcohol, isopropyl alcohol, acetone and N,N-dimethylformamide.

9. A process as set forth in claim 7, wherein the solvent of claim 7 is used as said dispersing medium.

10. A process as set forth in claim 1, wherein said dispersing medium is selected to be a compound having a critical point less than that of said solvent as utilized in claim 7 for preparation of said denatured polymer and to replace said solvent.

11. A process as set forth in claim 10, wherein said compound solvent with the low critical point is liquefied carbon dioxide.

12. A process as set forth in claim 7, wherein said hydrophobic agent is at least one selected from the group consisting of hexamethyldisilazane, hexamethyldisiloxane, trimethylchlorosilane, trimethylmethoxysilane, trimethylethoxysilane, triethylethoxysilane, triethylmethoxysilane, dimethyldichlorosilane, dimethyldiethoxysilane, methyltrichlorosilane and ethyltrichlorosilane.

13. A process as set forth in claim 1, wherein said hydrophobic agent is selected from the group consisting of a carboxylic acid such as acetic acid, formic acid and succinic acid, and a halogenated alkyl such as methylchloride.

14. A process of forming a hydrophobic aerogel comprising the steps of:
hydrolyzing and condensing, in the presence of water, an alcohol, and an alkoxysilane which is expressed by the following formula;
SiR¹ ₙ(OR²)₄₋ₙ
wherein each of R¹ and R² stands for a C₁ - C₅ alkyl group or phenyl group, n is 0-2, [R¹ may be the same or different groups of said groups when n=2, R² may be the same or different ones of said groups when n ≤ 2], to obtain an alcogel having a skeleton structure of (SiO₂)ₙ and silanol groups;
performing a hydrophobic treatment to said alcogel with a solution of a hydrophobic agent in a first solvent having higher solubility to said hydrophobic agent than said alcohol in order to form a hydrophobic alcogel, said hydrophobic agent having hydrophobic groups as well as functional groups reactive to said silanol groups;
replacing said first solvent included in the hydrophobic alcogel with the alcohol of the hydrolyzing step;
replacing said alcohol at least partially with carbon dioxide which has a lower critical point than said first alcohol; and
supercritically drying the resulting alcogel at temperature and pressure above a critical point of a mixture of said alcohol and said carbon dioxide or said carbon dioxide.

15. A process as set forth in claim 14, wherein said first solvent has a higher boiling point than an alcohol.

16. A process as set forth in claim 15, wherein said first solvent is a toluene.

17. A process of forming a hydrophobic aerogel comprising the steps of
hydrolyzing and condensing, in the presence of water, an alcohol, and an alkoxysilane which is expressed by the following formula;
SiR¹ ₙ(OR²)₄₋ₙ
wherein each of R¹ and R² stands for a C₁ - C₅ alkyl group or phenyl group, n is 0-2, [R¹ may be the same or different groups of said groups when n=2, R² may be the same or different ones of said groups when n ≤ 2], to obtain an alcogel having a skeleton structure of (SiO₂)ₙ and a silanol groups;
performing a hydrophobic treatment to said alcogel with a solution of a hydrophobic agent in a first solvent having higher solubility to said hydrophobic agent than said alcohol in order to form a hydrophobic alcogel, said hydrophobic agent having hydrophobic groups as well as functional groups reactive to said silanol groups;
replacing said first solvent included in the hydrophobic alcogel with the alcohol of the hydrolyzing step;
supercritically drying the resulting alcogel at temperature and pressure above a critical point of said alcohol.

## Patentansprüche

1. Ein Verfahren zur Herstellung eines hydrophoben Aerogels, das die Schritte umfaßt:
Umsetzen eines Polymers mit einer Skelettstruktur aus (SiO₂)ₙ mit einem hydrophoben Mittel, das hydrophobe Gruppen sowie funktionale Gruppen, die gegenüber Silanolgruppen reaktiv sind, aufweist, um ein denaturiertes Polymer zu erhalten;
Dispergieren besagten denaturierten Polymers in einem Dispergiermedium, um ein resultierendes Gel zu bilden; und
überkritisches Trocknen besagten resultierenden Gels bei einer Temperatur und einem Druck oberhalb eines kritischen Punktes besagten Dispergiermediums.

2. Ein Verfahren nach Anspruch 1, wobei besagtes Polymer besagte Silanolgruppen aufweist, die mit den funktionalen Gruppen besagten hydrophoben Mittels reagieren.

3. Ein Verfahren nach Anspruch 1, wobei besagte funktionale Gruppe ausgewählt ist aus der Gruppe, die aus Halogen, Aminogruppe, Iminogruppe, Carboxylgruppe und Alkoxylgruppe besteht.

4. Ein Verfahren nach Anspruch 3, wobei besagte hydrophobe Gruppe ausgewählt ist aus der Gruppe, die aus Alkylgruppe und Phenylgruppe besteht.

5. Ein Verfahren nach Anspruch 1, wobei besagtes hydrophobe Mittel eine Silanverbindung ist.

6. Ein Verfahren nach Anspruch 1, wobei besagtes Polymer bereitgestellt wird durch Hydrolysieren und Kondensieren eines Alkoxysilans, das ausgedrückt wird durch die folgende Formel.
SiR¹ ₙ(OR²)₄₋ₙ
wobei R¹ und R² jeweils für eine C₁ - C₅-Alkylgruppe oder eine Phenylgruppe steht, n 0-2 ist, R¹ dieselben oder unterschiedliche Gruppen von besagten Gruppen sein können, wenn n=2, R² dieselben oder unterschiedliche von besagten Gruppen sein können, wenn n ≤ 2.

7. Ein Verfahren nach Anspruch 6, wobei besagtes Hydrolysieren und Kondensieren bewirkt wird durch die Verwendung einer wäßrigen Lösung eines Lösemittels, das in der Lage ist, mit Wasser kompatibel zu sein und besagtes Alkoxysilan zu lösen.

8. Ein Verfahren nach Anspruch 7, wobei besagtes Lösemittel ausgewählt ist aus der Gruppe, die aus Methylalkohol, Ethylalkohol, Isopropylalkohol, Aceton und N,N-Dimethylformamid besteht.

9. Ein Verfahren nach Anspruch 7, wobei das Lösemittel von Anspruch 7 als besagtes Dispergiermedium verwendet wird.

10. Ein Verfahren nach Anspruch 1, wobei besagtes Dispergiermedium so ausgewählt ist, daß es eine Verbindung ist, die einen kritischen Punkt aufweist, der niedriger ist als derjenige von besagtem Lösemittel, wie eingesetzt in Anspruch 7, zur Herstellung besagten denaturierten Polymers, und daß es besagtes Lösemittel ersetzt.

11. Ein Verfahren nach Anspruch 10, wobei besagtes Verbindungslösemittel mit dem niedrigen kritischen Punkt verflüssigtes Kohlendioxid ist.

12. Ein Verfahren nach Anspruch 7, wobei besagtes hydrophobe Mittel wenigstens eines ist, das ausgewählt ist aus der Gruppe, die aus Hexamethyldisilazan, Hexamethyldisiloxan, Trimethylchlorsilan, Trimethylmethoxysilan, Trimethylethoxysilan, Triethylethoxysilan, Triethylmethoxysilan, Dimethyldichlorsilan, Dimethyldiethoxysilan, Methyltrichlorsilan und Ethyltrichlorsilan besteht.

13. Ein Verfahren nach Anspruch 1, wobei besagtes hydrophobes Mittel ausgewählt ist aus der Gruppe, die aus einer Carbonsäure, wie etwa Essigsäure, Ameisensäure und Bernsteinsäure, und einem halogenierten Alkyl, wie etwa Methylchlorid, besteht.

14. Ein Verfahren zur Herstellung eines hydrophoben Aerogels, das die Schritte umfaßt:
Hydrolysieren und Kondensieren, in der Gegenwart von Wasser, eines Alkohols und eines Alkoxysilans, das ausgedrückt wird durch die folgende Formel;
SiR¹ ₙ(OR²)₄₋ₙ
wobei R¹ und R² jeweils für eine C₁-C₅-Alkylgruppe oder Phenylgruppe steht, n 0-2 ist, [R¹ dieselben oder unterschiedliche Gruppen von besagten Gruppen sein können, wenn n=2, R² dieselben oder unterschiedliche von besagten Gruppen sein können, wenn n ≤ 2], um ein Alcogel mit einer Skelettstruktur aus (SiO₂)ₙ und Silanolgruppen zu erhalten;
Durchführen einer hydrophoben Behandlung an besagtem Alcogel mit einer Lösung eines hydrophoben Mittels in einem ersten Lösemittel mit höherer Löslichkeit gegenüber besagtem hydrophoben Mittel als besagter Alkohol, um ein hydrophobes Alcogel zu bilden, wobei besagtes hydrophobe Mittel hydrophobe Gruppen sowie funktionale Gruppen, die gegenüber besagten Silanolgruppen reaktiv sind, aufweist;
Ersetzen besagten ersten Lösemittels, das in dem hydrophoben Alcogel eingeschlossen ist, durch den Alkohol des Hydrolysierschrittes;
wenigstens teilweises Ersetzen besagten Alkohols durch Kohlendioxid, das einen niedrigeren kritischen Punkt aufweist als besagter erster Alkohol; und
überkritisches Trocknen des resultierenden Alcogels bei einer Temperatur und einem Druck oberhalb eines kritischen Punktes einer Mischung aus besagtem Alkohol und besagtem Kohlendioxid oder besagten Kohlendioxids.

15. Ein Verfahren nach Anspruch 14, wobei besagtes erste Lösemittel einen höheren Siedepunkt aufweist als ein Alkohol.

16. Ein Verfahren nach Anspruch 15, wobei besagtes erste Lösemittel ein Toluol ist.

17. Ein Verfahren zur Herstellung eines hydrophoben Aerogels, das die Schritte umfaßt:
Hydrolysieren und Kondensieren, in der Gegenwart von Wasser, eines Alkohols und eines Alkoxysilans, das ausgedrückt wird durch die folgende Formel:
SiR¹ ₙ(OR²)₄₋ₙ,
wobei R¹ und R² jeweils für eine C₁-C₅-Alkylgruppe oder Phenylgruppe steht, n 0-2 ist, [R¹ dieselben oder unterschiedliche Gruppen von besagten Gruppen sein können, wenn n=2, R² dieselben oder unterschiedliche von besagten Gruppen sein können, wenn n ≤ 2], um Alcogel mit einer Skelettstruktur aus (SiO₂)ₙ und Silanolgruppen zu erhalten;
Durchführen einer hydrophoben Behandlung an besagtem Alcogel mit einer Lösung eines hydrophoben Mittels in einem ersten Lösemittel mit höherer Löslichkeit gegenüber besagtem hydrophoben Mittel als besagter Alkohol, um ein hydrophobes Alcogel zu bilden, wobei besagtes hydrophobe Alcogel hydrophobe Gruppen sowie funktionale Gruppen, die gegenüber besagten Silanolgruppen reaktiv sind, aufweist;
Ersetzen besagten ersten Lösemittels, das im hydrophoben Alcogel eingeschlossen ist, durch den Alkohol des Hydrolysierschrittes;
überkritisches Trocknen des resultierenden Alcogels bei einer Temperatur und einem Druck oberhalb eines kritischen Punktes besagten Alkohols.

## Revendications

1. Un procédé de formation d'un aérogel hydrophobe, comprenant les étapes de :
réaction d'un polymère ayant un squelette à structure de (SiO₂)ₙ avec un agent d'hydrophobisation ayant des groupes hydrophobes ainsi que des groupes fonctionnels réactifs avec des groupes silanol pour obtenir un polymère dénaturé ;
dispersion dudit polymère dénaturé dans un milieu de dispersion pour former un gel résultant ; et
séchage surcritique dudit gel résultant à une température et une pression supérieures à un point critique dudit milieu de dispersion.

2. Un procédé tel que défini dans la revendication 1, dans lequel ledit polymère comporte lesdits groupes silanol réagissant avec les groupes fonctionnels dudit agent d'hydrophobisation.

3. Un procédé tel que défini dans la revendication 1, dans lequel ledit groupe fonctionnel est choisi dans la classe formée par un halogène, un groupe amino, un groupe imino, un groupe carboxyle et un groupe alcoxy.

4. Un procédé tel que défini dans la revendication 3, dans lequel ledit groupe hydrophobe est choisi dans la classe formée par un groupe alkyle et un groupe phényle.

5. Un procédé tel que défini dans la revendication 1, dans lequel ledit agent d'hydrophobisation est un silane.

6. Un procédé tel que défini dans la revendication 1, dans lequel ledit polymère est obtenu par hydrolyse et condensation d'un alcoxysilane qui est représenté par la formule suivante :
SiR¹ ₙ(OR²)₄₋ₙ
où chacun de R¹ et R² représente un groupe alkyle en C₁-C₅ ou un groupe phényle, n est 0 à 2, R¹ peut représenter des groupes identiques ou différents parmi lesdits groupes lorsque n = 2, R² peut représenter des groupes identiques ou différents parmi lesdits groupes lorsque n ≤ 2.

7. Un procédé tel que défini dans la revendication 6, dans lequel lesdites hydrolyse et condensation sont effectuées en utilisant une solution aqueuse d'un solvant capable d'être compatible avec l'eau et de dissoudre ledit alcoxysilane.

8. Un procédé tel que défini dans la revendication 7, dans lequel ledit solvant est choisi dans la classe formée par l'alcool méthylique, l'alcool éthylique, l'alcool isopropylique, l'acétone et le N,N-diméthylformamide.

9. Un procédé tel que défini dans la revendication 7, dans lequel le solvant de la revendication 7 est utilisé à titre dudit milieu de dispersion.

10. Un procédé tel que défini dans la revendication 1, dans lequel ledit milieu de dispersion est choisi de façon à être un composé ayant un point critique inférieur à celui dudit solvant tel qu'utilisé dans la revendication 7 pour la préparation dudit polymère dénaturé et à remplacer ledit solvant.

11. Un procédé tel que défini dans la revendication 10, dans lequel ledit composé utilisé comme solvant ayant le bas point critique est l'anhydride carbonique liquéfié.

12. Un procédé tel que défini dans la revendication 7, dans lequel ledit agent d'hydrophobisation est au moins un composé choisi dans la classe formée par l'hexaméthyldisilazane, l'hexaméthyldisiloxane, le triméthylchlorosilane, le triméthylméthoxysilane, le triméthyléthoxysilane, le triéthyléthoxysilane, le triéthylméthoxysilane, le diméthyldichlorosilane, le diméthyldiéthoxysilane, le méthyltrichlorosilane et l'éthyltrichlorosilane.

13. Un procédé tel que défini dans la revendication 1, dans lequel ledit agent d'hydrophobisation est choisi dans la classe formée par un acide carboxylique tel que l'acide acétique, l'acide formique et l'acide succinique, et un halogénure d'alkyle tel que le chlorure de méthyle.

14. Un procédé de formation d'un aérogel hydrophobe, comprenant les étapes de :
hydrolyse et condensation, en présence d'eau, d'un alcool et d'un alcoxysilane qui est représenté par la formule suivante :
SiR¹ ₙ(OR²)₄₋ₙ
où chacun de R¹ et R² représente un groupe alkyle en C₁-C₅ ou un groupe phényle, n est 0 à 2, [R¹ peut représenter des groupes identiques ou différents parmi lesdits groupes lorsque n = 2, R² peut représenter des groupes identiques ou différents parmi lesdits groupes lorsque n ≤ 2], pour obtenir un alcoogel ayant un squelette à structure de (SiO₂)ₙ et des groupes silanol ;
exécution d'un traitement d'hydrophobisation dudit alcoogel avec une solution d'un agent d'hydrophobisation dans un premier solvant ayant un plus grand pouvoir dissolvant pour ledit agent d'hydrophobisation que ledit alcool afin de former un alcoogel hydrophobe, ledit agent d'hydrophobisation ayant des groupes hydrophobes ainsi que des groupes fonctionnels réactifs avec lesdits groupes silanol ;
remplacement dudit premier solvant inclus dans l'alcoogel hydrophobe par l'alcool de l'étape d'hydrolyse ;
remplacement au moins partiel dudit alcool par de l'anhydride carbonique qui a un point critique plus bas que celui dudit premier alcool ; et
séchage surcritique de l'alcoogel résultant à une température et une pression supérieures à un point critique d'un mélange dudit alcool et dudit anhydride carbonique ou dudit anhydride carbonique.

15. Un procédé tel que défini dans la revendication 14, dans lequel ledit premier solvant a un point d'ébullition supérieur à celui d'un alcool.

16. Un procédé tel que défini dans la revendication 15, dans lequel ledit premier solvant est le toluène.

17. Un procédé de formation d'un aérogel hydrophobe comprenant les étapes de :
hydrolyse et condensation, en présence d'eau, d'un alcool et d'un alcoxysilane qui est représenté par la formule suivante :
SiR¹ ₙ(OR²)₄₋ₙ
où chacun de R¹ et R² représente un groupe alkyle en C₁-C₅ ou un groupe phényle, n est 0 à 2, [R¹ peut représenter des groupes identiques ou différents parmi lesdits groupes lorsque n = 2, R² peut représenter des groupes identiques ou différents parmi lesdits groupes lorsque n ≤ 2], pour obtenir un alcoogel ayant un squelette à structure de (SiO₂)ₙ et des groupes silanol ;
exécution d'un traitement d'hydrophobisation dudit alcoogel avec une solution d'un agent d'hydrophobisation dans un premier solvant ayant un plus grand pouvoir dissolvant pour ledit agent d'hydrophobisation que ledit alcool afin de former un alcoogel hydrophobe, ledit agent d'hydrophobisation ayant des groupes hydrophobes ainsi que des groupes fonctionnels réactifs avec lesdits groupes silanol ;
remplacement dudit premier solvant inclus dans l'alcoogel hydrophobe par l'alcool de l'étape d'hydrolyse ;
séchage surcritique de l'alcoogel résultant à une température et une pression supérieures à un point critique dudit alcool.
